Europäisches Patentamt

European Patent Office

Office européen des brevets

(11) Numéro de publication: **0 109 906**
**A1**

(12) **DEMANDE DE BREVET EUROPEEN**

(21) Numéro de dépôt: 83402225.3

(22) Date de dépôt: 18.11.83

(51) Int. Cl.³: **B 64 C 31/02**

(30) Priorité: 19.11.82 FR 8219419

(43) Date de publication de la demande:
30.05.84 Bulletin 84/22

(84) Etats contractants désignés:
CH DE GB IT LI

(71) Demandeur: Darlet, Jean-Louis

F-65400 Ferre Argeles(FR)

(72) Inventeur: Darlet, Jean-Louis

F-65400 Ferre Argeles(FR)

(74) Mandataire: CABINET BONNET-THIRION
95 Boulevard Beaumarchais
F-75003 Paris(FR)

(54) **Planeur ultra-léger et voile pour un tel planeur.**

(57) Planeur ultra-léger appartenant à la catégorie dite des "ailes souples", caractérisé par au moins une zone de découplage (20) en sens transversal dans la voile (17). Dans une forme de réalisation la zone de découplage comporte une fente (21), s'étendant en sens longitudinal depuis le mât (16) de la structure, jusqu'au bord de fuite (19). La voile comporte des moyens (22) adaptés à maintenir sous tension la voile d'extrados et empêcher tout élargissement intempestif de la fente (21).

L'invention concerne également une voile pour un tel planeur ultra-léger.

FIG.2

## Planeur ultra-léger et voile pour un tel planeur.

La présente invention concerne un planeur ultra-léger, motorisé ou non, appartenant à la catégorie dite des "ailes souples", et une voile pour un tel planeur.

Depuis une dizaine d'années le domaine des planeurs ultra-légers est bien connu du public. En général, dans leur version non motorisée, les planeurs ultra-légers sont conçus pour pouvoir être mis en vol grâce à l'énergie que dépense le pilote en courant dans une pente avec l'appareil. D'autres moyens d'envol sont parfois utilisés, parmi ceux-ci, on peut citer le tractage de l'ensemble pilote-planeur ultra-léger ou de roulage du planeur dans une pente.

Dans leur version motorisée, les planeurs sont conçus pour pouvoir être mis en vol au moyen d'un moteur de faible puissance. La réglementation actuellement en vigueur en France limite le poids total d'un tel planeur ultra-léger motorisé à 150 kilos.

D'une manière générale, on distingue deux catégories de planeurs ultra-légers que l'on appelle également ailes: les ailes dites "souples" et les ailes dites "rigides".

Une aile est dite "souple" dès lors qu'une partie de son profil, au moins, se déforme en vol. Cette déformation a lieu sur l'ensemble de l'envergure de l'aile et dépend, pour toute section longitudinale donnée de l'aile, de l'angle d'incidence du vent relatif, ou angle formé par le vent relatif avec la corde du profil dans la section considérée. D'une manière générale, plus l'angle d'incidence est élevé, plus le profil se creuse, tandis que plus l'angle d'incidence est faible, plus le profil s'aplatit.

Par opposition, on appelle aile "rigide", une aile dont le profil ne se déforme pas en fonction de l'angle d'incidence du vent relatif.

Les ailes rigides se pilotent en général au moyen de gouvernes aérodynamiques. Dans certains types d'ailes rigides en tangage, le pilotage peut s'effectuer par déplacement du centre de gravité vers l'avant ou vers l'arrière, mais un tel type de pilotage est rendu difficile en roulis, pour une aile rigide, en raison notamment de l'absence de possibilité de déformation du profil.

Par contre, les ailes "souples" se pilotent par déplacement du centre de gravité, tant en roulis qu'en tangage.

A la connaissance du Demandeur, il n'existe pas sur le marché, à l'heure actuelle, d'ailes "souples" comportant des gouvernes aérodynamiques permettant ou facilitant le pilotage.

En effet, s'il reste possible d'envisager l'implantation sur une aile "souple" d'une ou plusieurs dérives ayant une action en lacet, cela n'a pas encore été fait jusqu'à présent, notamment en raison du manque d'efficacité sur le plan aérodynamique de cette solution.

Par contre, il en irait tout autrement de gouvernes aérodynamiques agissant en tangage ou en roulis. Cependant, les ailes actuelles se prêtent très peu à une telle éventualité.

En effet, ces ailes comportent une structure faite de tubes d'aluminium, sur laquelle on vient tendre une voile d'extrados unique pour les deux demi-ailes droite et gauche. Certaines ailes comportent également une voile d'intrados comportant une ou plusieurs parties solidarisées par une attache du type "VELCRO". Ces voiles sont, le plus souvent, lattées. Les lattes sont suffisamment rigides pour préformer le profil de l'aile, notamment au niveau du bord d'attaque, et suffisamment souples pour permettre, comme expliqué plus haut, une déformation du profil en vol et en particulier de la moitié arrière de ce profil, sous l'action du vent relatif.

Dans ces conditions, il est parfaitement inenvisageable, dans l'état actuel de la technique, de créer des volets de courbure courant, par exemple, le long du bord de fuite, tels que ceux des aéronefs usuels ou de certains types de planeurs ultra-légers rigides.

Or, s'agissant de maniabilité, les ailes souples actuelles ne donnent pas entière satisfaction. L'homme de l'art sait bien que, pour obtenir un virage sur une aile souple, les profils des deux demi-ailes, respectivement intérieure et extérieure au virage, doivent pouvoir se déformer facilement au cours de l'initiation ou de l'inversion du virage, en sorte que l'angle d'incidence du vent relatif sur la demi-aile extérieure au virage augmente, tandis que l'angle d'incidence de la demi-aile intérieure au virage diminue. Or, la voile d'extrados étant unique pour les deux demi-ailes considérées, la tension extrême à laquelle on la soumet actuellement, sur les structures des appareils, fait que la déformation relative du tissu des demi-ailes interne et externe peut difficilement avoir lieu. Ce défaut a pour effet de rendre les ailes actuelles peu maniables en virage.

Une solution consisterait bien sûr, à détendre le tissu sur la structure, ce qui aurait pour effet de faciliter les déformations relatives du tissu des deux demi-ailes, mais qui aurait pour inconvénient, de diminuer les performances de l'appareil, en particulier sa finesse et sa vitesse maximales.

Cette solution ne permet donc que d'arriver à un mauvais compromis performances-maniabilité.

Le fait que la voile d'extrados soit unique et de surcroît très tendue sur la structure, présente également un autre inconvénient. Il est, à l'heure actuelle, très difficile de réaliser, en sortie d'usine, une machine qui ne présente aucune tendance naturelle au virage, soit à droite, soit à gauche. De fait, la plupart des machines commercialisées présentent une très légère tendance naturelle au virage. De plus, il est pratiquement impossible de remédier à cette tendance par un réglage de la voile. En effet, il faudrait pouvoir tendre ou détendre la voile sur une demi-aile pour résoudre naturellement la tendance au virage. Comme la voile est unique et en plus très tendue, on comprend facilement qu'une action de tension ou de détension de la voile sur une demi-aile se répercute automatiquement sur l'autre demi-aile.

Un objet de la présente invention est de pallier les inconvénients rappelés ci-dessus en proposant un nouveau planeur ultra-léger appartenant à la catégorie des ailes dites "souples".

Un autre objet de la présente invention est, d'une manière générale, d'améliorer les possibilités de contrôle aérodynamique en vol de tous planeurs ultra-légers appartenant à la catégorie des ailes dites "souples".

La présente invention vise un planeur ultra-léger, appartenant à la catégorie des ailes "souples", du genre comportant une structure portant une voile d'extrados et une voile d'intrados, caractérisé par l'aménagement d'au moins une zone de découplage en sens transversal dans l'une au moins desdites voiles.

La présente invention concerne également une voile pour un tel planeur ultra-léger.

Grâce à cette disposition, on ménage ainsi dans la voile au moins deux zones libres dissociées en sens transversal. La tension du tissu pour chaque demi-aile peut se faire indépendamment, ce qui permet tous les réglages, d'une demi-aile par rapport à l'autre, une tendance naturelle à virer étant de ce fait corrigée.

De plus, la zone de découplage permet aux demi-ailes de se déformer indépendamment l'une de l'autre, notamment en virage. La mise en virage et le contrôle du virage sont ainsi facilités.

D'autres caractéristiques et avantages de la présente invention ressortiront d'ailleurs de la description qui va suivre, à titre d'exemple, en référence aux dessins annexés sur lesquels :

la figure 1 est une vue en perspective d'un planeur ultra-léger appartenant à la catégorie des ailes dites "souples", selon la présente invention ;

la figure 2 est une vue en perspective partielle du planeur selon la flèche II de la figure 1 ;

la figure 3 est une vue en perspective partielle du planeur selon la flèche III de la figure 1 ;

la figure 4 est un agrandissement de l'encart IV de la figure 3 ;

la figure 5 est une vue correspondant à la figure 4, illustrant un autre mode de réalisation ;

la figure 6 est une vue correspondant à la figure 5, à plus grande échelle, illustrant un autre mode de réalisation de la présente invention ;

la figure 7 est une vue schématique de dessus d'un planeur ultra-léger mettant en oeuvre un autre mode de réalisation de la présente invention ;

la figure 8 est une vue schématique représentant superposées les sections selon les plans x-x et y-y du planeur de

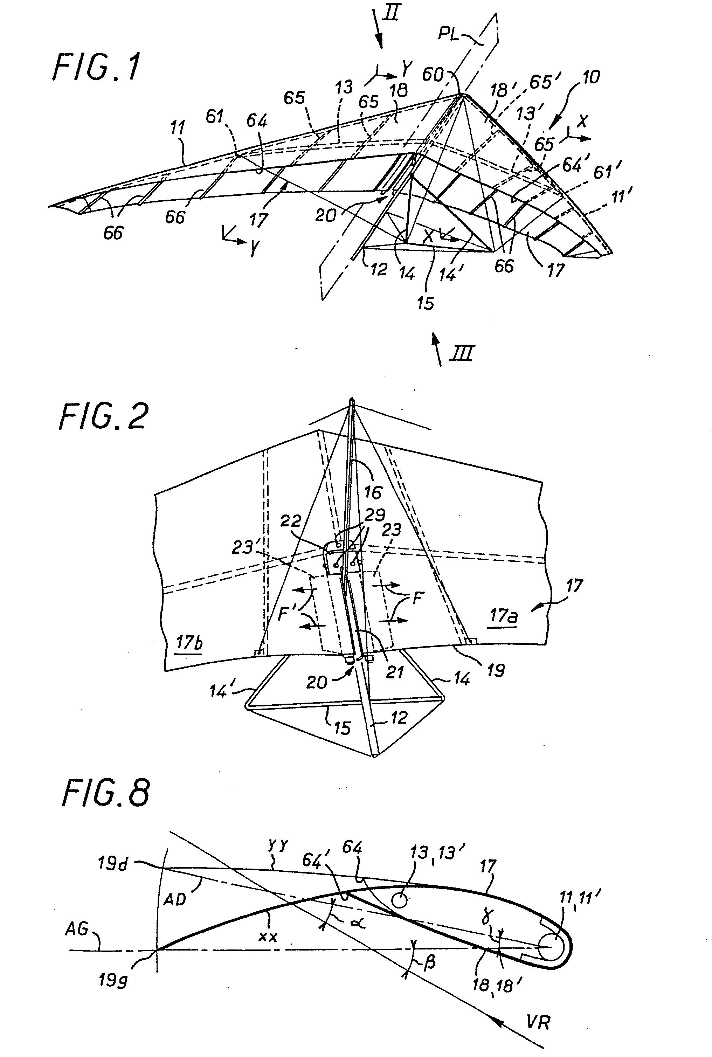

la figure 1 en vol et à l'initiation d'un virage à droite, le
planeur étant vu du dessus, les plans x-x et y-y étant équidistants et parallèles à un plan longitudinal de symétrie de
la voile d'extrados du planeur de la figure 1.

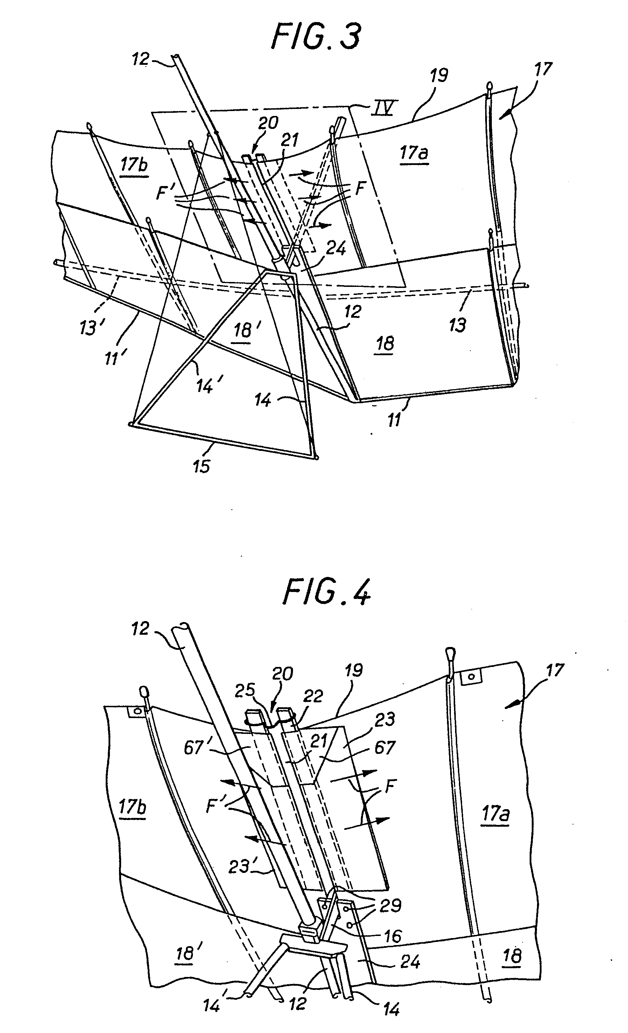

Selon la forme de réalisation choisie et représentée aux
figures 1 à 4, un planeur ultra-léger, selon la présente invention, comporte de manière connue en soi, une structure composée de : deux tubes dits de bord d'attaque 11, 11', un tube
central 12 appelé "quille", deux tubes principaux 13, 13' travaillant en compression et appelés chacun "transversale". La
structure comporte également, disposé en dessous de l'appareil,
un trapèze formé de deux tubes appelés "montants de trapèze"
14, 14' et d'une barre dite "de contrôle" 15. Sur le dessus
de l'appareil, la structure comporte également un mât 16 (figure 2).

Un ensemble de câbles (non référencés) relie le mât d'une
part et le trapèze d'autre part, à la jonction 60 des tubes
de bords d'attaque 11, 11' ; à la quille 12 ; à la jonction
61, (61') du tube du bord d'attaque 11, (11') avec la transversale 13 (13').

La voilure supportée par la structure ainsi constituée,
comporte une voile d'extrados unique 17 et une voile d'intrados en deux parties solidarisées 18, 18', ainsi qu'un dispositif de mise sous tension desdites voiles. Les voiles sont
lattées. En 65, 65' et 66 on a représenté schématiquement les
lattes et fourreaux de lattes respectivement des voiles d'intrados et d'extrados.

Dans la forme de réalisation considérée, les transversales 13, 13' sont disposées entre la voile d'extrados 17 et
les voiles d'intrados 18, 18' (figure 8), les transversales
13, 13' n'ayant, de plus, aucun point de solidarisation avec
la quille 12. Aussi, l'aile représentée à titre d'exemple en
figure 1 est-elle qualifiée, dans les milieux intéressés, de
"double surface à transversale interne flottante".

On observera également que dans la forme de réalisation
considérée, la voile d'intrados en deux parties 18, 18' ne recouvre pas la surface totale de la voile d'extrados 17, une couture 64, 64' reliant les voiles d'extrados et d'intrados vers le milieu du profil.

Il est connu que l'on peut alors considérer le rapport entre la surface de la voile d'intrados et celle de la voile d'extrados. Dans l'exemple des figures 1 à 6, ce rapport est d'environ 0,6.

Il convient de rappeler que l'on peut définir un plan longitudinal de symétrie de la voile d'extrados. Ce plan est normal à celui défini par les bords d'attaque 11, 11'. En figure 1, ce plan a été schématisé et référencé en PL. Le sens transversal est, par conséquent, défini par toute droite sensiblement orthogonale au plan PL. La position moyenne de la quille en cours de vol, et notamment en vol symétrique, est dans ledit plan longitudinal de symétrie PL de la voile d'extrados 17. Dans certaines configurations de vol non symétriques, par exemple, en virage, la quille est amenée à se déplacer et quitte alors ledit plan longitudinal de symétrie PL.

L'ensemble des dispositions rappelées, jusqu'à présent, est bien connu de l'homme de l'art et, n'entrant pas dans le cadre de la présente invention, ne sera pas décrit plus en détail ici.

Selon la présente invention, la voile d'extrados 17 comporte une zone de découplage 20, en sens transversal s'étendant à partir du bord de fuite 19.

Dans la forme de réalisation représentée aux figures 1 à 4, la zone de découplage 20 comporte une fente 21 ménagée dans la voile d'extrados 17 à l'intersection du plan longitudinal de symétrie PL avec ladite voile d'extrados. La fente 21 s'étend sur une partie de ladite intersection et, dans l'exemple de réalisation représenté, depuis le passage du mât 16 dans la voile 17 jusqu'au bord de fuite 19 de ladite voile (voir figures 2 à 4).

Selon une autre caractéristique de l'invention, la voile d'extrados 17 comporte en outre, dans ladite zone de découplage 20, des moyens de maintien adaptés à maintenir sous tension la voile d'extrados, notamment en sens transversal, et à empêcher tout élargissement intempestif de la fente 21, notamment sous l'action des forces transversales de tension.

Dans la forme de réalisation représentée aux figures 1 à 4, les moyens de maintien comportent notamment une pièce rigide de maintien 22, en forme de U, qui s'étend en sens longitudinal de part et d'autre de la fente 21.

La pièce de maintien 22 est maintenue dans la voile 17 d'une part, par deux rabats de toile 23, 23' formant deux fourreaux 67, 67' (figure 2) et d'autre part, par boulonnage sur une pièce profilée 24 s'étendant, dans l'intrados de l'aile depuis le pied du mât 16, jusqu'à la jonction des bords d'attaque 11, 11'. La pièce profilée 24 est conformée de façon à avoir une forme correspondant sensiblement au profil que doivent prendre, au centre de l'aile, les demi-voiles d'intrados 18, 18' en vol.

Les pièces 22 et 24 sont boulonnées en 29 au travers de la voile 17.

En sens longitudinal, la pièce de maintien 22 et la pièce profilée 24 sont relativement souples pour s'adapter aux variations du profil sous l'action du vent relatif. Par contre, en sens transversal, la pièce 22 doit offrir une résistance adaptée aux contraintes dont il va être question ci-après.

Il convient ici de rappeler que, pour qu'un planeur, tel que celui représenté aux figures 1 à 4, ait de bonnes performances, notamment en ce qui concerne sa finesse maximale et sa vitesse maximale, il faut que les voiles d'extrados 17 et d'intrados 18, 18' soient très tendues, en particulier en sens transversal.

Cette tension est schématisée aux figures 2, 3 et 4 par les flèches F, F'. Bien entendu, lorsque l'appareil est en vol, les forces de tension F, F' augmentent sensiblement. Aussi est-il essentiel que la pièce de maintien présente d'excellentes caractéristiques de résistance en sens transversal pour éviter que la fente 21 ne s'ouvre complètement en vol.

Toutefois, pour le cas où la pièce de maintien ne présenterait plus les caractéristiques requises de résistance en sens transversal, par exemple, par suite d'une rupture, une

8

cordelette de sécurité 25 est prévue au-delà du bord de fuite 19.

Grâce à la zone de découplage 20 et plus particulièrement, figures 1 à 4, à la fente 21, on ménage dans la voile d'extrados 17 deux zones dites "libres" 17a, 17b, dissociées en sens transversal.

Il faut rappeler ici, d'une manière générale, à l'appui des figures 1 et 8, certaines caractéristiques de mise en virage d'un planeur ultra-léger appartenant à la catégorie des ailes dites "souples".

En figure 8, on a représenté, superposées l'une sur l'autre, deux sections longitudinales du planeur représenté en figure 1, lorsque ce planeur se trouve en vol et à l'initiation d'un virage vers la droite. Ces sections ont été prises dans les plans x-x et y-y de la figure 1, ces plans étant équidistants au plan longitudinal de symétrie PL et parallèles à ce dernier.

De façon classique, la mise en virage, par exemple, vers la droite, d'un tel planeur, se fait par déplacement du centre de gravité de l'ensemble pilote-planeur vers la droite.

L'homme de l'art sait bien que le pilote est accroché à un point situé sensiblement en dessous du mât 16, près de la jonction des montants de trapèzes 14, 14'. Par action sur la barre de contrôle 15, le pilote se déplace sur la droite du trapèze pour effectuer ledit virage vers la droite. Le centre de gravité pilote-planeur est ainsi modifié, ce qui entraîne une modification de la charge alaire des deux demi-ailes disposées respectivement de part et d'autre du plan longitudinal de symétrie PL : dans cet exemple, la charge alaire de la demi-aile droite augmente, tandis que la charge alaire de la demi-aile gauche diminue.

Cette variation relative de la charge alaire de chaque demi-aile entraîne une déformation de leurs profils respectifs en sorte que, figure 8, l'angle d'incidence $\alpha$ moyen du vent relatif sur la demi-aile droite (section y-y) diminue tandis que l'angle d'incidence $\beta$ sur la demi-aile gauche (section x-x) augmente ; l'angle $\alpha$ étant mesuré entre la direction générale du vent relatif -flèche VR- la corde AD de la demi-aile droite à la section y-y, schématisée en figure 8 en traits interrompus ; l'angle $\beta$ étant mesuré entre la direction de la flèche VR et la corde AG du profil à la section x-x.

On observera que le bord de fuite 19 se déforme au cours d'un tel virage pour prendre les positions référencées en 19g (section x-x) et 19d (section y-y). Cette déformation a lieu dans une direction dite "orthogonale" sensiblement parallèle au plan longitudinal PL et sensiblement perpendiculaire à la direction de la quille 12. Cette déformation du bord de fuite 19 permet de définir, pour les sections x-x et y-y, un angle dit "de différence d'incidence $\gamma$" mesuré entre la corde AG de l'aile gauche et la corde AD de l'aile droite, sur les sections x-x et y-y.

Ce mécanisme de déformation des demi-ailes droite et gauche au cours de l'initiation d'un virage, est bien connu de l'homme de l'art, qui sait que, notamment pour les appareils qualifiés de "double surface à transversale interne flottante" de l'art antérieur, l'angle de différence d'incidence $\gamma$ est toujours très faible à cause de la tension très forte de la voile d'extrados.

Par exemple, sur un appareil de l'art antérieur, cet angle de différence d'incidence est en général de 4° pour l'initiation d'un virage incliné à 45°. De plus, il faut comprendre que pour un appareil de l'art antérieur, cette déformation du bord de fuite 19 ne peut avoir lieu que sur une portion relativement faible du bord de fuite 19, de part et d'autre des plans de section x-x et y-y, l'angle de différence d'incidence étant nul pour la portion du bord de fuite disposée à l'aplomb de la quille 12. Il faut également souligner que cette déformation de 4° est difficile à obtenir de façon rapide à cause de la tension de la voile. Aussi, les appareils à double surface de l'art antérieur sont-ils peu maniables en virage et par exemple, il faut, en général, compter de 4 à 6 secondes pour inverser un virage incliné à 45°, c'est-à-dire pour passer d'un virage incliné de 45° vers la droite à un virage incliné de 45° vers la gauche. Le mécanisme ci-dessus et ses effets sont bien connus et on ne les décrira pas plus en détail ici.

Grâce à la zone de découplage 20 en sens transversal selon la présente invention, et dans cet exemple, grâce à la fente 21, l'angle de différence d'incidence $\gamma$ pour l'appareil, selon la présente invention, est notablement plus élevé que pour les planeurs de l'art antérieur. De plus, la présence de cette zone de découplage permet une déformation rapide du bord de fuite 19, le bord de fuite de chacune des zones libres 17a et 17b pouvant se déplacer en sens orthogonal sans contrainte de la part de l'autre desdites zones, grâce à la discontinuité créée dans le bord de fuite 19, au niveau de la zone 20, ce qui permet d'avoir, dans l'exemple des figures 1 à 4, un angle de différence d'incidence de valeur non nulle, qui peut être de l'ordre de quelques degrés, en fonction de la souplesse de la pièce de maintien 22, dans la portion du bord de fuite disposée sensiblement à l'aplomb de la quille 12.

Grâce à cette disposition, le temps d'inversion d'un virage à 45° pour un planeur ultra-léger selon la présente invention, est notablement réduit par rapport à celui d'un planeur équivalent de l'art antérieur puisqu'il est de l'ordre de 2 à 3 secondes au lieu de 4 à 6 secondes.

La maniabilité est donc améliorée de façon considérable.

Dans le cas où il ne serait pas souhaitable d'améliorer la maniabilité dans une telle proportion, un avantage particulièrement intéressant, selon la présente invention, réside dans le fait que la voile d'extrados 17 peut être tendue en sens transversal, nettement plus que dans des planeurs équivalents de l'art antérieur.

Il faut comprendre que le problème général qui se pose pour les ailes souples, est celui du compromis performance-maniabilité. En effet, plus la voile d'extrados est tendue, meilleures sont les performances, notamment au niveau finesse et vitesse maximales.

Par contre, plus on tend la voile, moins le planeur est maniable puisque l'angle de différence d'incidence prend alors une valeur relativement faible.

Par rapport aux ailes de l'art antérieur, la présente invention permet d'améliorer la maniabilité à tension de la voile constante. Si la maniabilité d'un planeur donné de l'art antérieur est estimée suffisante, c'est-à-dire que par exemple un temps de 4 à 6 secondes pour inverser un virage incliné à 45° est estimé suffisant, en incluant dans ce planeur la zone de découplage selon la présente invention, on peut alors tendre encore plus la voile d'extrados tout en conservant la même maniabilité, mais en en améliorant les performances de façon très sensible, puisque la finesse maximale passe alors d'environ 9 à environ 11 et la vitesse maximale passe d'environ 60 à environ 100 km/h.

Un autre avantage de la zone de découplage selon la présente invention, réside dans le fait que les tensions de la voile d'extrados pour les demi-ailes droite et gauche, et notamment la tension F pour les portions 17a et la tension F' pour la portion 17b de cette voile (figures 2, 3, 4), peuvent être réglées indépendamment l'une de l'autre, puisque la pièce de maintien 22 est très résistante en sens transversal.

Une tendance naturelle au virage peut ainsi être compensée de manière simple et efficace.

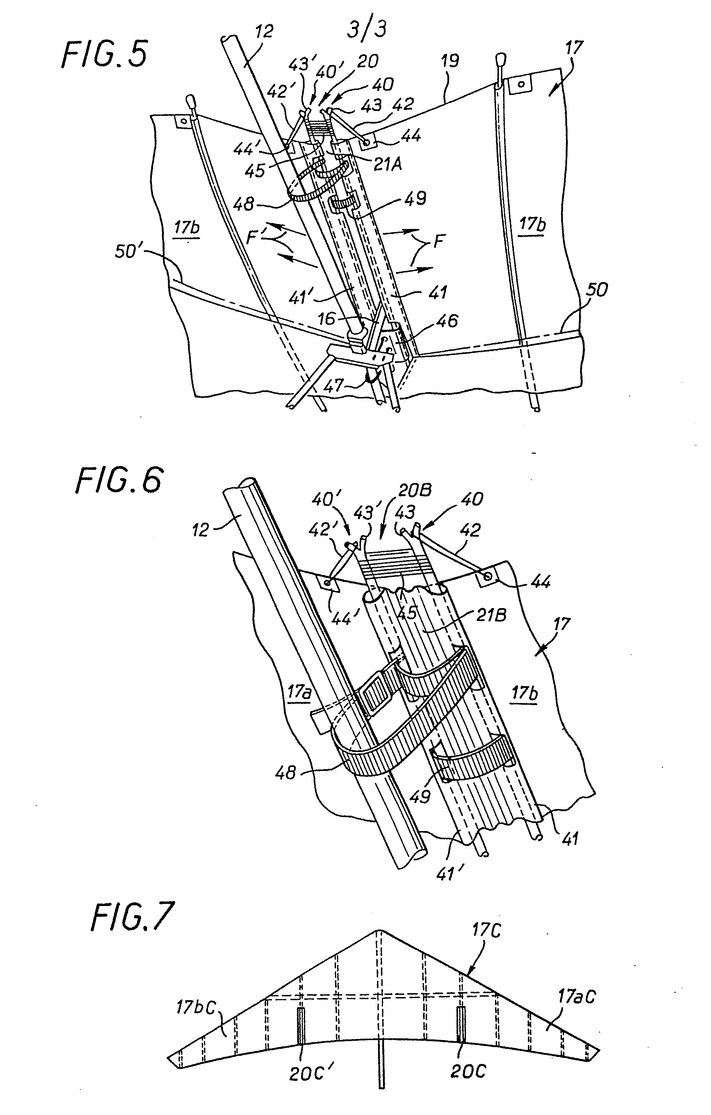

On va maintenant décrire à l'appui des figures 5 à 7, trois autres modes de réalisation, les éléments communs aux figures 1 à 7 portant des références identiques, tandis que les autres éléments portent des références différentes.

En figure 5, la zone de découplage 20 comporte également une fente 21A semblable à la fente 21 du mode de réalisation des figures 1 à 4. Par contre, les moyens de maintien adaptés à maintenir sous tension la voile d'extrados 17, et à empêcher tout élargissement intempestif de la fente 21, notamment sous l'action des forces transversales des tensions F, F', comportent deux lattes 40 et 40' engagées dans des fourreaux de lattes 41, 41' ménagés dans la voile d'extrados 17 de part et d'autre de la fente 21. Ces moyens de maintien comportent également des moyens élastiques adaptés à maintenir sensiblement constant l'écartement transversal des deux lattes 40, 40'.

Dans l'exemple de réalisation de la figure 5, pour chacune des lattes 40, 40', ces moyens élastiques se présentent sous forme d'un élastique 42 (42') disposé entre l'extrémité 43 (43') de la latte 40 (40') et un oeillet 44 (44') de la voile d'extrados 17. Les moyens élastiques comportent également un élastique 45 réunissant les deux lattes 40, 40'.

La tension des trois élastiques 42, 42', 45 est déterminée en sorte que l'écartement en sens transversal de la fente 21A reste à peu près constant.

A l'avant du mât 16, les deux fourreaux de lattes 41, 41' sont réunis par un organe-pivot se présentant sous forme d'une pièce de tissu 46 comportant une sangle 47 reliant, de façon réglable, en sens orthogonal, l'organe-pivot 46, et par conséquent, l'extrémité de la fente 21A, à la quille 12.

A l'autre extrémité, côté bord de fuite, un organe de réglage de profil se présentant sous forme d'une sangle 48, relie la quille 12 aux lattes 40, 40'. Cette sangle réglable permet de régler la distance moyenne entre la voile 17 et la quille 12.

La zone de découplage 20 comporte également une sangle de sécurité 49 reliant, sans être mises en tension, les lattes 40, 40'.

En fonctionnement, au cours de l'initiation de virage à droite (voir figures 1 et 8), les profils des demi-ailes droite et gauche peuvent se déformer et un angle de différence d'incidence $\gamma$ apparaît sur l'ensemble de l'envergure et en particulier au niveau de la zone de découplage 20, l'élastique 45 opposant une résistance négligeable au déplacement, en sens orthogonal, de l'extrémité des lattes 43, 43' et par conséquent, au bord de fuite 19 des zones libres 17a, 17b.

Cette forme de réalisation est particulièrement facile et peu onéreuse à mettre en oeuvre.

Elle présente en outre les avantages suivants :

L'organe-pivot 46 à l'extrémité de la fente 21A étant réglé à une distance orthogonale prédéterminée de la quille 12 au moyen de la sangle 47, on définit ainsi, en quelque sorte, une "charnière" pour les zones libres 17a et 17b autour de laquelle ces zones libres peuvent pivoter. En vol, cette charnière est matérialisée, en sens transversal, par la tension de la voile d'extrados F, F' et s'étend donc pour les demi-ailes droite et gauche en sens sensiblement parallèles aux flèches F, F'. Cette charnière a été schématisée en figure 5, par deux lignes en traits mixtes 50, 50'. La distance orthogonale entre l'organe-pivot 46 et la quille 12 est réglée au moyen de la sangle 47.

La sangle 48 permet de régler la distance orthogonale entre les lattes 40, 40' et la quille 12.

Ces moyens de réglage 47 et 48 permettent ainsi de régler le profil de l'aile à l'aplomb de la quille 12, le moyen de réglage 47 permettant en outre de régler la distance entre l'organe-pivot 46, les charnières 50, 50' et la quille 12.

Dans la forme de réalisation représentée en figure 5, on peut également prévoir des lattes 40, 40' présentant une certaine souplesse en sens transversal. Ainsi, par exemple, aux basses vitesses, c'est-à-dire lorsque l'angle d'incidence moyen du vent relatif sur l'ensemble de l'envergure de l'aile augmente, ce qui entraîne une augmentation concomitante des forces de tension F, F', la souplesse relative des lattes 40, 40' en sens transversal sous l'action des forces de tension F, F' permet à ces lattes de se déformer et de prendre une flèche de l'ordre de quelques millimètres ou quelques dizaines de millimètres.

Les moyens de maintien, ici les lattes 40, 40', sont donc adaptés pour permettre un élargissement de la fente 21A de l'ordre de quelques millimètres ou quelques dizaines de millimètres. Aussi, dans cet exemple, le profil de l'aile peut se creuser à ces basses vitesses (20 à 30 Km/h), ce qui augmente les caractéristiques de portance et de maniabilité du planeur aux vitesses considérées.

La sécurité est ainsi améliorée dans des proportions notables par rapport aux appareils équivalents de l'art antérieur.

La figure 6 est une vue correspondant à la figure 5 et illustre le fait que la zone de découplage 20 ne comporte pas nécessairement une fente, mais au contraire, peut être constituée par une portion de voile ou de tissu 21B détendue et disposée entre les fourreaux de latte 41 et 41'. Cette portion de voile 21B peut être suffisamment détendue pour permettre l'ouverture facile d'un angle de différence d'incidence important au niveau des lattes 40, 40' ou au contraire, la portion de voile 21B peut être en légère tension pour limiter l'ouverture dudit angle de différence d'incidence à l'aplomb de la quille 12 si, par exemple, on veut corriger une maniabilité excessive ou une instabilité en spirale. A cet effet, la portion de voile 21B peut avantageusement être élastique. Il va de soi que la tension de la portion 21B reste, de toutes façons, inférieure à celle du reste de la voile 17.

La figure 7 illustre un planeur selon la présente invention, mettant en oeuvre un autre mode de réalisation.

La voile d'extrados 17C du planeur ultra-léger de la figure 7 comporte deux zones de découplage 20C, 20C' permettant de ménager dans la voile d'extrados 17C, deux zones libres 17aC, 17bC.

Dans cette forme de réalisation, l'angle de différence d'incidence est très faible pour la portion de voile comprise entre les zones de découplage 20C et 20C', et assez élevé pour toutes sections symétriques prises au-delà des zones de découplage 20C et 20C'.

Bien entendu, la présente invention ne se limite pas aux formes de réalisation décrites et représentées, mais englobe toutes variantes d'exécution et/ou de réalisation.

En particulier, dans les formes de réalisation décrites à l'appui des figures 1 à 7, l'angle de différence d'incidence est obtenu à l'initiation d'un virage uniquement par variation de la charge alaire des demi-ailes droite et gauche due à un déplacement du pilote. Il va de soi que l'on peut envisager tous systèmes mécaniques permettant d'augmenter et/ou de diminuer cet angle de différence d'incidence et remplaçant ou complétant l'effet de la variation de charge alaire sans sortir du cadre de la présente invention.

En outre, le mode de réalisation représenté aux figures 1 à 6 fait intervenir un planeur dont le rapport entre la surface de la voile d'intrados et celle d'extrados est de 0,6. La zone de découplage y est aménagée dans la voile d'extrados seulement.

Il va de soi que, sans sortir du cadre de l'invention, on peut aménager une ou plusieurs zone(s) de découplage dans la voile d'intrados, en particulier lorsque ledit rapport s'approche de 0,8 ou de 1.

## REVENDICATIONS

1. Planeur ultra-léger appartenant à la catégorie dite des "ailes souples", le planeur comportant une structure portant une voile d'extrados et une voile d'intrados, caractérisé par l'aménagement d'au moins une zone (20) de découplage en sens transversal s'étendant, à partir du bord de fuite, dans l'une au moins desdites voiles.

2. Planeur selon la revendication 1, caractérisé en ce que la zone de découplage (20) comporte une fente (21).

3. Planeur selon la revendication 2, caractérisé en ce que la fente s'étend sur une partie au moins d'une section longitudinale de ladite voile (17).

4. Planeur selon l'une des revendications 2 ou 3, caractérisé en ce que la fente est ménagée dans la voile d'extrados (17), à l'intersection d'un plan longitudinal de symétrie (PL) de la voile d'extrados avec ladite voile d'extrados.

5. Planeur selon la revendication 4, dont la structure comporte un mât, caractérisé en ce que la fente s'étend en sens longitudinal depuis le passage du mât (16) dans la voile d'extrados (17) jusqu'au bord de fuite (19) de la voile d'extrados.

6. Planeur selon l'une quelconque des revendications 2 à 5, caractérisé en ce que ladite voile (17) comporte en outre, dans ladite zone de découplage (20) des moyens de maintien adaptés à maintenir sous tension la voile, notamment en sens transversal, et à empêcher tout élargissement intempestif de la fente (21), notamment sous l'action des forces transversales de tension (F, F').

7. Planeur selon la revendication 6, caractérisé en ce que lesdits moyens de maintien sont adaptés à permettre un élargissement de la fente (21) de l'ordre de quelques millimètres ou quelques dizaines de millimètres sous l'action des forces transversales de tension.

8. Planeur selon l'une quelconque des revendications 6 ou 7, caractérisé en ce que les moyens de maintien comportent une pièce rigide de maintien (22) en forme de U, s'étendant en sens longitudinal de part et d'autre de la fente (21).

9. Planeur selon l'une quelconque des revendications 5, 7, caractérisé en ce que les moyens de maintien comportent deux lattes (40,40') engagées dans des fourreaux (41,41') ménagés dans ladite voile (17), de part et d'autre de la fente (21A), des moyens élastiques (42,42',45) adaptés à maintenir sensiblement constant l'écartement transversal des deux lattes.

10. Planeur selon la revendication 1, caractérisé en ce que la zone de découplage (20B) en sens transversal, comporte une portion de tissu (21B) non soumise à la tension transversale de ladite voile (17), et des moyens adaptés à maintenir sous tension la voile, notamment en sens transversal, de part et d'autre de la zone de découplage (20B).

11. Planeur selon la revendication 10, caractérisé en ce que ladite portion de tissu (21B) est élastique.

12. Planeur selon l'une quelconque des revendications 10, 11, caractérisé en ce que les moyens de maintien comportent deux lattes (40,40') engagées dans des fourreaux (41,41') ménagés dans ladite voile (17), de part et d'autre de la zone de découplage (20B), des moyens élastiques (42,42',45) adaptés à maintenir sensiblement constant l'écartement transversal des deux lattes.

13. Planeur selon l'une quelconque des revendications 10 ou 12, caractérisé en ce que lesdites lattes (40,40') sont prévues suffisamment souples pour pouvoir prendre, en sens transversal, une flèche de l'ordre de quelques millimètres ou quelques dizaines de millimètres.

14. Planeur ultra-léger selon l'une quelconque des revendications 9 à 13, dont la structure comporte un tube central, dit "quille", dont la position moyenne en cours de vol est dans un plan longitudinal de symétrie de la voile d'extrados, caractérisé en ce que l'extrémité en sens longitudinal de la zone de découplage (20) opposée au bord de fuite (19) comporte un organe-pivot (45) dont la distance, en sens orthogonal, par rapport à la quille (12), est réglable.

15. Planeur ultra-léger selon la revendication 13, caractérisé en ce qu'il comporte également un moyen de réglage (48) de la distance moyenne en sens orthogonal entre le bord de fuite (19) de l'aile et la quille (12).

16. Voile pour planeur ultra-léger, caractérisée en ce que la voile comporte au moins une paire de fourreaux (67,67', 41,41') s'étendant de part et d'autre d'une zone longitudinale (20) d'interruption de continuité en sens transversal.

17. Voile selon la revendication 16, caractérisée en ce que ladite zone longitudinale comporte une fente.

18. Voile selon la revendication 16, caractérisée en ce que ladite zone comporte une portion de tissu.

19. Voile selon la revendication 18, caractérisée en ce que ladite portion de tissu est élastique.

FIG.1

FIG.2

FIG.8

# FIG. 3

# FIG. 4

0109906

3/3

FIG.5

FIG.6

FIG.7

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 135 482 (GIRARD)<br>* Colonne 2, lignes 56-61; figure 7 *<br><br>----- | 1 | B 64 C 31/02 |

|  |  |  | DOMAINES TECHNIQUES RECHERCHES (Int. Cl. ³) |
|---|---|---|---|
|  |  |  | B 64 C 31/02 |

Le présent rapport de recherche a été établi pour toutes les revendications

| Lieu de la recherche | Date d'achèvement de la recherche | Examinateur |
|---|---|---|
| LA HAYE | 20-02-1984 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82